# EUROPEAN PATENT SPECIFICATION

(11) **EP 3 465 975 B1**
(45) Date of publication and mention of the grant of the patent: **21.07.2021**
(21) Application number: 16725521.5
(22) Date of filing: 26.05.2016
(51) Int. Cl.: H04L 9/08, H04L 9/32

(54) **PROVIDING ACCESS TO SENSITIVE DATA**
BEREITSTELLUNG DES ZUGANGS ZU SENSIBLEN DATEN
MISE EN PLACE D'UN ACCÈS À DES DONNÉES SENSIBLES

(43) Date of publication of application: 10.04.2019
(73) Proprietor: Genomcore, S.L., 08950 Esplugues De Llobregat (ES)
(72) Inventor: SITGES PUY, Marc, 08950 Esplugues De Llobregat (ES); FRÍAS MOYA, Leonor, 08950 Esplugues De Llobregat (ES); RÀMIA JESUS, Miquel, 08950 Esplugues De Llobregat (ES); FLORES GURI, Oscar, 08950 Esplugues De Llobregat (ES)
(74) Representative: ZBM Patents - Zea, Barlocci & Markvardsen
(86) International application number: PCT/EP2016/061896
(87) International publication number: WO 2017/202467

(56) References cited:
- WO-A1-2014/206795
- US-A1- 2002 071 566
- US-A1- 2009 034 733
- US-A1- 2014 068 279
- US-A1- 2014 289 536
- US-B1- 6 947 556
- US-B1- 9 338 008

## Description

### FIELD OF THE INVENTION

The present disclosure relates to methods, systems and computer program products for providing access to sensitive data, such as e.g. genomic data, associated to a user.

### BACKGROUND

Genomic data is an example of sensitive data that should be stored and accessed by its owner and/or authorized person under strong security conditions. Genomic data may be very bulky, since, for example, a whole genome sequencing experiment can take about 500 gigabytes of data.

Other examples of bulky and sensitive data may be other types of sequencing data (such as e.g. DNA-Seq., RNA-Seq., ChIP-Seq. data), clinical data, financial data, etc. In all these cases, security is a crucial aspect regarding storage and provision of access to the sensitive data, in order to avoid that a hacker can gain access to the data and make a malicious use thereof.

A data system may be defined as a system securely storing some kind of data (e.g. genomic data) and providing authorized users with functionalities for accessing said data in a secured manner.

It is known that some data systems use a Public Key Infrastructure (PKI) based on a public key and a private key owned by an authorized user (e.g. a user associated to the owner of the data). In this case, the sensitive data may be encrypted using the public key in such a way that the authorized user can decrypt the encrypted data using the private key.

In this context, the decryption of the data cannot be performed at the data system in a centralized manner because the private key is at the user (client) side. This PKI approach therefore requires that the decryption of the data is performed at the user side (through e.g. a user system or client system operated by the user), which may simply be impracticable with large amounts of data.

There is a need for new methods, systems and computer program products for providing access to sensitive data that improve the prior art methods, systems and computer program products with such functionality.

Patent documents US 6 947 556 and US 2014/068279 disclose methods for accessing personal data based on decrypting an encrypted encryption key.

### SUMMARY

In one aspect, a method is disclosed of providing, by a data system, access to sensitive data associated to a user, the data system storing an encrypted version of the sensitive data obtained as a result of encrypting the sensitive data using an encryption key associated to the user. The sensitive data may comprise sequencing data, which may include genomic data such as e.g. a whole genome sequencing experiment of a person associated to the user. The method comprises receiving, from a user system, a user request requesting the provision of access, retrieving an encrypted version of the encryption key, and retrieving at least one auxiliary key.

The method further comprises obtaining a decrypted version of the encryption key by decrypting the encrypted version of the encryption key using the at least one auxiliary key.

The method still further comprises obtaining a decrypted version of all or part of the sensitive data by decrypting all or part of the encrypted version of the sensitive data using the decrypted version of the encryption key.

The method yet further comprises providing access to the decrypted version of all or part of the sensitive data through a secure communication channel.

The expression "encryption key" is used herein to refer to a random string of bits created explicitly for encrypting (or decrypting) sensitive data by using an encryption algorithm having as inputs the encryption key and the data to be encrypted (or decrypted). Examples of encryption algorithms are RSA and RCA. Encryption keys are typically generated based on algorithms aimed at ensuring that every generated encryption key is unpredictable and unique.

The expression "auxiliary key" is used herein to refer to relatively short information, such as e.g. a password or a passphrase, which allows encrypting (or decrypting) data using an encryption algorithm having as inputs the auxiliary key and the data to be encrypted (or decrypted). The same encryption algorithm may be used with an encryption key to encrypt/decrypt sensitive data, and also with an auxiliary key to encrypt/decrypt the encryption key in the context of the suggested method.

The proposed method permits providing an authorized user with access to sensitive data in a very secure manner, since the data is stored (in the data system) in encrypted form, said encryption of the sensitive data having been performed using an encryption key that also is kept encrypted. An attacker should thus overcome several "interlaced" security obstacles to gain "malicious" access to the sensitive data. In particular, various keys and interrelated decryption steps should be discovered by the attacker to gain such an access.

The term "interlaced" is used herein to indicate that the execution of a security step needs the previous execution of another security step. In particular, the security step of decrypting sensitive data using the encryption key cannot be performed if the security step of decrypting the encrypted encryption key has not been performed before.

The method may further comprise deleting the decrypted version of the encryption key and the decrypted version of all or part of the sensitive data when no more needed. For example, the decrypted version of the encryption key may be deleted just after completion of obtaining the decrypted version of all or part of the sensitive data. The decrypted version of all or part of the sensitive data may be deleted just after completion of the provision of access.

With such deletions, the encryption key and the sensitive data are in decrypted (or clear) form during a limited period of time. This restricted time may significantly reduce the leeway for an attacker to obtain necessary data and resolve corresponding interlaced security steps for completing an attack. Hence, the risk of malicious manipulations of the sensitive data is minimized.

In examples of the method, the encrypted version of the encryption key may be retrieved from a repository in the data system. This repository may be local or remote with respect to a main site of the data system comprising main elements such as e.g. a processor configured to perform the method.

In some of these examples, the at least one auxiliary key may comprise a user key, so that the encrypted version of the encryption key cannot be decrypted without the user key. The user key may have been created by the user and may have been included (by the user) in the user request received by the data system.

The method may further comprise deleting the user key (just) after completion of decrypting the encrypted version of the encryption key, so that the user key is not stored anywhere in the data system and, hence, it is only permanently known by the user.

This way, the user (who may of course correspond to the owner of the sensitive data) may have absolute control on the access to his/her sensitive data. For example, in the case that the staff in charge of managing the data system were requested to provide sensitive data in clear form to a competent authority (e.g. the police), this would be impossible without the provision of the user key by the user.

In some implementations, the method may further comprise hashing the received user key using a predefined hash function, and comparing the hashed user key with a hash value of reference.

The hash value of reference may be a hash value pre-calculated applying the (same) predefined hash function to a user key previously provided by the user as user key of reference.

If the hash value of reference and the hashed user key are coincident, the received user key may be considered valid in the sense that the received user key and the previously provided user key of reference are identical. This means the encrypted version of the encryption key can be decrypted using the received user key.

Otherwise, the received user key may be considered invalid in the sense that the received user key and the previously provided user key of reference are different. In this case, the method may be finished or aborted. In some implementations, the user may be requested to repeat the provision of the user key up to a predefined number of times, before the method is finished without permitting the access requested by the user.

The hash value of reference may have been calculated as part of a registration process, or as part of a re-initialization process in the case that e.g. the user has forgotten the user key or simply wants to change the user key.

The registration process may comprise creating and initializing any type of data associated to the user and aimed at internally managing the data system (e.g. user ID, encrypted unique encryption key, hash value of reference, etc.).

The registration process may comprise e.g. creating the encrypted version of the encryption key by encrypting the encryption key using a user key of reference provided by the user. The registration process may further comprise creating the hash value of reference by hashing the user key of reference using the predefined hash function. Accordingly, the hash value of reference corresponds to a hashed version of the user key (of reference) with which the encryption key has been encrypted.

The re-initialization process may comprise re-initializing the encrypted version of the encryption key by encrypting the (decrypted) encryption key using a user key of reference provided by the user, and re-initializing the hash value of reference by hashing the user key of reference. As a result, the hash value of reference now corresponds to a hashed version of the user key of reference with which the encryption key has been re-encrypted. From this moment, the user may request the provision of access by using the user key of reference as the user key in accordance with previous descriptions of the method.

In some examples, the at least one auxiliary key may further comprise a system key associated to the data system, so that both the user key and the system key are necessary for decrypting the encrypted version of the encryption key.

The system key may be only known by the data system, so that its use along with the received user key may provide an increased security to the method and data system. If, for example, an attacker succeeded to know the user key at the user (system) side, this would not suffice to perform a malicious attack because the system key is also required to decrypt the encrypted version of the encryption key at the data system.

Alternatively to the aforementioned retrieval from a (local or remote) repository in the data system, the encrypted version of the encryption key may be a backup version of the encryption key which may be included in the received user request. In this case, the encrypted version of the encryption key may thus be retrieved from the received user request.

The backup version of the encryption key may have been generated and provided to the user in the context of a registration process such as the ones described in other parts of the description. The backup version of the encryption key may have been obtained by encrypting the encryption key using only the system key.

According to these principles, the at least one auxiliary key may comprise the system key associated to the data system, which may be only known by the data system, and may be the only auxiliary key necessary to decrypt the received backup version of the encryption key.

The backup version of the encryption key may be exceptionally used by the user when e.g. the user has forgotten the user key, so that the provision of access cannot be performed depending on the user key, since it is missing (e.g. forgotten by the user).

Even in the case that the user has not forgotten the (current) user key, the backup version of the encryption key may be used by the user to change the user key with which his/her encryption key is encrypted in the data system. In such a change of user key, the backup (encrypted) version of the encryption key may be decrypted using the system key, and subsequently re-encrypted using a (new) user key of reference provided by the user (and, optionally, the system key). A change of user key has thus been performed in the sense that the (current) user key has been replaced by the (new) user key of reference (and, optionally, the system key).

In alternative implementations, instead of the backup version of the encryption key, the user may provide (if not forgotten) the current user key to the data system. In this case, the encrypted version of the encryption key may be decrypted using the (current) user key and subsequently re-encrypted using a (new) user key of reference provided by the user (and, optionally, the system key). A change of user key has thus been performed in an alternative manner with the same result.

Still with reference to the alternative methods, the received user request may comprise a new user key created by the user, which may play the role of the user key of reference previously defined in the context of re-initialization processes.

Once the backup version of the encryption key has been decrypted using only the system key, the obtained decrypted version of the encryption key may be encrypted using the user key of reference and, optionally, the system key.

The obtained encrypted version of the encryption key generated using the user key of reference (and optionally the system key) may be stored in the data system for later executions of the method as the ones explained before, wherein the provision of access depends on a user key provided by the user (and, optionally, on the system key).

With reference yet to the above alternative methods, the user key of reference may be hashed using a predefined hash function for obtaining a hash value for validation purposes. Said obtained hash value may be the hash value of reference previously defined. The obtained hash value of reference may be stored somewhere in the data system.

The user key of reference may be deleted once it is no more required, i.e. once the user key of reference has been hashed and has been used to encrypt the decrypted version of the encryption key. This may significantly reduce the leeway for an attacker to obtain the user key of reference, so that the security of the method and data system is improved.

In at least some of the previously described examples, the system key may be stored only in a volatile memory (e.g. RAM) in the data system, so that the method may comprise retrieving the system key from said volatile memory. The system key may be inputted into the data system by an operator through data entry functionality when the data system is initiated, instead of having it permanently stored in a non-volatile memory (storage system) in the data system.

The absence of the system key in non-volatile memories of the data system may improve the security of the data system, since the risk that an attacker can gain access to the system key for malicious use is significantly reduced.

In examples of the method, only the user system, or only a third party system, or both the user system and the third party system may be provided with secure access to the decrypted version of all or part of the sensitive data through the secure communication channel.

Providing the third party system with access to sensitive data may comprise receiving, in e.g. the user request, authorization data indicating that the third party system has been authorized by the user. Once received, the data system may implement said authorization by permitting the third party system to access selected decrypted sensitive data according to e.g. selection criteria comprised in the user request.

Details about how the secure communication channel may be implemented are provided in other parts of the description.

Accordingly, examples of the method described herein may provide different innovative and versatile ways of providing access to sensitive data.

In another aspect, a data system is disclosed for providing access to sensitive data associated to a user. The data system comprises means for storing an encrypted version of the sensitive data obtained as a result of encrypting the sensitive data using an encryption key associated to the user, and means for receiving, from a user system, a user request requesting the provision of access.

The data system further comprises means for retrieving an encrypted version of the encryption key, means for retrieving at least one auxiliary key, and means for obtaining a decrypted version of the encryption key by decrypting the encrypted version of the encryption key using the at least one auxiliary key.

The data system still further comprises means for obtaining a decrypted version of all or part of the sensitive data by decrypting all or part of the encrypted version of the sensitive data using the decrypted version of the encryption key.

The data system additionally comprises means for providing access to the decrypted version of all or part of the sensitive data through a secure communication channel.

The means comprised in the data system may be electronic or computing means used interchangeably, that is, a part of the described means may be electronic means and the other part may be computer means, or all described means may be electronic means or all described means may be computer means. Examples of systems comprising only electronic means may be a CPLD (Complex Programmable Logic Device), an FPGA (Field Programmable Gate Array) or an ASIC (Application-Specific Integrated Circuit).

In another aspect, a computing system is disclosed. The computing system may comprise a memory and a processor, embodying instructions stored in the memory and executable by the processor, the instructions comprising functionality to execute a method of providing access to sensitive data according to some examples disclosed herein.

The computing system may be a part of the data system, i.e. a computing system inside the data system, or may be the data system itself. A communication network may be provided between the computing system and the user system, for example a global communication network such as the Internet.

The information exchange between the computing system and the user system may be performed through such a communication network. Said communication may be secured by means of, for example, a SSL tunnel or a HTTP/TLS protocol established between the computing system and the user system.

In yet another aspect, a computer program product is disclosed. The computer program product may comprise program instructions for causing a computing system to perform a method of providing access to sensitive data according to examples disclosed herein. The computing system executing the program instructions may be a part of the data system (i.e. a sub-system inside the data system configured to reproduce the method described above) or may be the data system itself.

The computer program product may be embodied on a storage medium (for example, a CD-ROM, a DVD, a USB drive, on a computer memory or on a read-only memory) or carried on a carrier signal (for example, on an electrical or optical carrier signal).

The computer program may be in the form of source code, object code, a code intermediate source and object code such as in partially compiled form, or in any other form suitable for use in the implementation of the method. The carrier may be any entity or device capable of carrying the computer program. For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

These and other advantages and features will become apparent in view of the detailed description and drawings.

The invention is defined by the independent claims.

### BRIEF DESCRIPTION OF THE DRAWINGS

Non-limiting examples of the present disclosure will be described in the following, with reference to the appended drawings, in which:
Figure 1 illustrates a block diagram of a data system according to examples.
Figure 2 schematically illustrates a data system equal or similar to the one shown in Figure 1 in communication with a user system and a third party system.
Figure 3 illustrates a flow diagram of a method of providing access to sensitive data according to further examples.
Figure 4 illustrates a flow diagram of a method of providing access to sensitive data according to still further examples.

### DETAILED DESCRIPTION

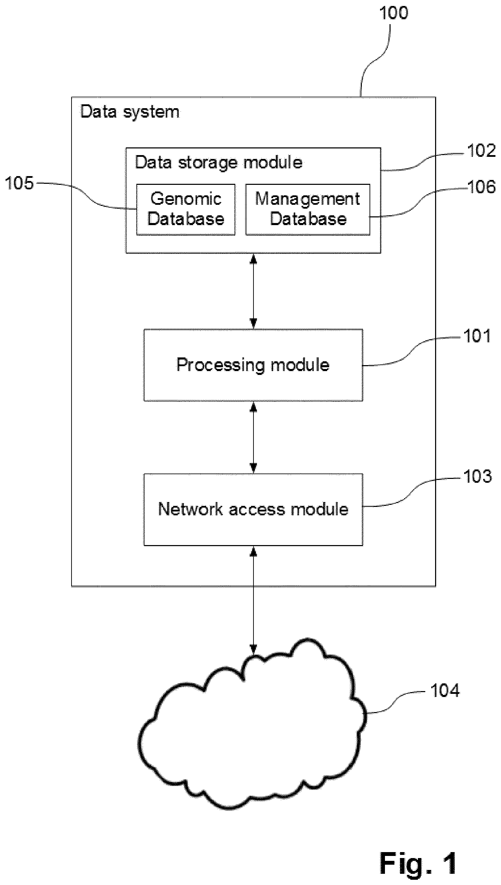

Figure 1 illustrates a block diagram of a data system 100 according to some examples. Basically, a data system 100 may comprise a processing module 101, a data storage module 102 for storing data such as e.g. genomic data, and a network access module 103 for providing access to a communication network 104, for example a global communication network such as the Internet. The data system 100 may communicate with other systems through the communication network 104 by using suitable communication protocol(s).

The data storage module 102 may comprise one or more databases 105, 106. For example, a first database 105 may be used to store genomic data of people associated to the users of the data system 100, and a second database 106 may be used to store other user-related data. The genomic data stored in the first database 105 may comprise e.g. data on whole genome sequencing experiments. This genomic data may be raw and/or processed genomic data to provide biologically/medically meaningful interpretation of such data. The second database 106 may be used to store management data such as e.g. unique user identifiers, encrypted unique encryption keys individually assigned to users, system keys, hashed user keys, etc.

The processing module 101 may be implemented by computing means, electronic means or a combination thereof. The computing means may be a set of instructions (that is, a computer program) and then the processing module may comprise a memory and a processor, embodying said set of instructions stored in the memory and executable by the processor. The instructions may comprise functionality to execute at least a method of providing access to sensitive (genomic) data as will disclosed below. In case the processing module 101 is implemented only by electronic means, the processing module may be, for example, a CPLD, an FPGA or an ASIC. In case the processing module 101 is a combination of electronic and computing means, the computing means may be a set of instructions and the electronic means may be any electronic circuit capable of implementing the corresponding step or steps of the cited method.

It is important to highlight that said processing module 101 may be implemented in the data system 100 by a system (or by a computing system) comprised in it or connected to it, and configured to specifically perform this method, or may be the data system itself as a whole. In this last case, the same resources (e.g. memory, processor, electronic circuits, etc.) of the data system 100 may be configured to perform different tasks (for example, among other tasks, the execution of the cited method).

The processing module 101 may be configured to provide necessary functionalities for performing methods of providing access to sensitive (genomic) data according to examples, such as the ones described in other parts of the description. For example, the processing module 101 may be configured to decrypt genomic data retrieved from the genomic database 105 by using corresponding key(s) retrieved from the management database 106. The processing module 101 may also be configured to provide other systems with secure access to the decrypted genomic data by using corresponding functionalities of the network access module 103.

The network access module 103 may be configured to be connected to a network access point such as a router (not shown in this figure). The router may be available in the vicinity of the data system 100 or may be comprised in the data system 100. The router may be connected to the communication network such as the Internet 104. This way, the data system 100 may communicate with other systems through the Internet 104 by using functionalities of the network access module 103 connected to the router.

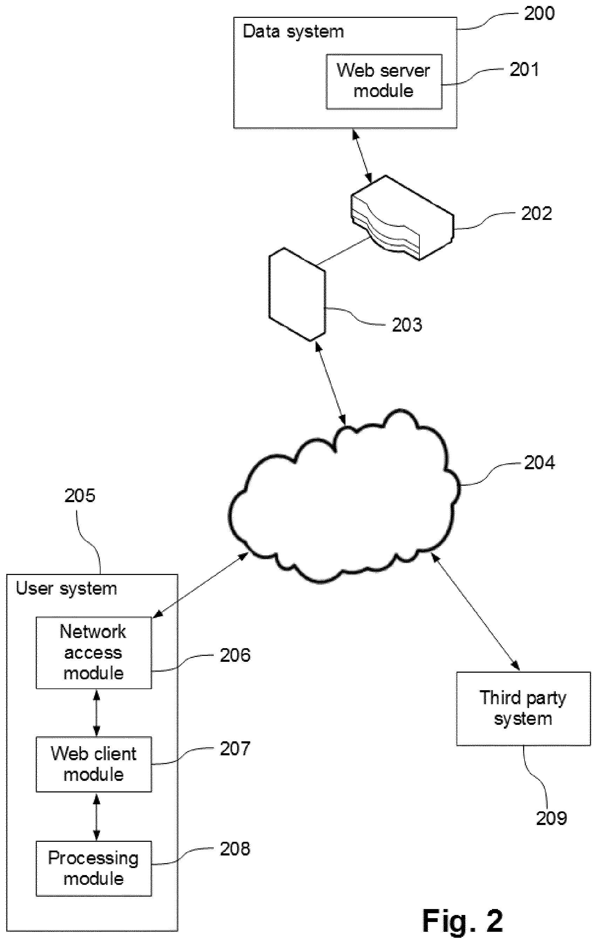

Figure 2 schematically illustrates a data system 200 equal or similar to the one shown in Figure 1 in communication with a user system 205 and a third party system 209. As shown in this figure, the data system 200 may comprise a web server module 201, which may have necessary functionalities for providing other systems (e.g. the user system 205 and the third party system 209) with web access.

The data system 200 may be connected to a communication network 204 such as the Internet. A router 202 may provide access to the communication network 204 for the data system 200. The router may be protected by a firewall 203 or not. The user system 205 may also be connected to the communication network 204 in a similar manner as the data system 200, for example. This way, the data system 200 and the user system 205 may communicate with each other through the communication network 204 via a secure channel based on e.g. a SSL tunnel or a HTTP/TLS protocol. Therefore, the configuration proposed in Figure 2 may establish a secure communications gateway via the communication network 204, such as the Internet, to enable bi-directional connections between the user system 205 and the data system 200. Bi-directional communications may be established in a secured form so that the information, the user system 205 and the data system 200 are safe from unauthorized use. The communications may be dynamically set regardless of whether the IP addresses of the devices are static or dynamic.

Concerning the user system 205, it may basically comprise a processing module 208, a web client module 207, and a network access module 206 for accessing the communication network 204.

The processing module 208 of the user system 205 may be implemented by computing means, electronic means or a combination of them. The computing means may be a set of instructions and the processing module 208 may comprise a memory and a processor, embodying said set of instructions stored in the memory and executable by the processor. These instructions may comprise functionalities to execute corresponding methods at the side of the user system 205 for accessing sensitive (genomic) data residing at the data system 200. In case the processing module 208 is implemented only by electronic means, said processing module may be, for example, a CPLD, an FPGA or an ASIC. In case the processing module 208 is a combination of electronic and computing means, the computing means may be a set of instructions and the electronic means may be any electronic circuit capable of implementing the corresponding step or steps of the cited methods.

The processing module 208 may be implemented in the user system 205 by a system (or by a computing system) comprised in it or connected to it, and configured to specifically perform the cited methods, or may be the user system itself as a whole, that is, the same resources (e.g. memory, processor, electronic circuits, etc.) of the user system 205 may be configured to perform different tasks (for example, among other tasks, the execution of the cited methods).

By means of the network access module 206, the user system 205 may connect through the communication network 204 with the data system 200 for exchanging information between them in a secure manner. For that purpose and others, the network access module 206 may be configured to be connected to a network access point such as a router (not shown). The router may be available in the vicinity of the user system or may be comprised in the user system 205, and may be connected to the communication network 204. As described above, the established communication between the user system 205 and the data system 200 may be a secure communication. Consequently, the user system 205 and the data system 200 may exchange information (user requests, sensitive data, etc.) through the secured communication.

The web client module 207 in the user system 205 may comprise functionalities so as to perform web-based access through a web interface (e.g. web pages) provided by the web server module 201 in the data system 200. This way, access to sensitive (genomic) data provided by the data system 200 may be performed by the user system 205 in a web-based manner.

The third party system 209 may have a configuration based on similar principles as the ones described above with respect to the user system 205, so that a secure communication between the third party system 209 and the data system 200 may also be established. The third party system 209 may be a system of a service provider dedicated to e.g. analysing sensitive genomic data from the data system 200, for providing biologically/medically meaningful interpretation of such genomic data.

The third party system 209 may be authorised from the user system 205 to access selected subsets of sensitive genomic data associated to the user, said subsets being stored encrypted in the data system 200. How this authorization may be received and processed by the data system 200 is explained in other parts of the description. Selected subsets of genomic data may be decrypted and then provided by the data system 200 in the form of e.g. persistent views, which may be generated and stored following a host-proof model by using an asymmetric pair of keys.

In particular, the persistent views may be provided by the data system 200 encrypted with a public key (of the pair of keys) that has been previously provided by the third party system 209 to the data system 200. This provision of the public key may have occurred as a result of a registration of a service provider from the third party system 209. Selected subsets can be either downloaded or accessed within the data system 200 from the third party system 209 using corresponding private key (of the pair of keys) for decrypting the persistent views.

Examples of data systems such as the data system 100 of Figure 1 or the data system 200 of Figure 2 may be configured to perform a method of registration of a (new) user in the data system. This registration of the user may comprise creating a unique encryption key exclusively associated to the user. This encryption key may be a random key, for example, and may be used to encrypt sensitive data associated to the user, such as e.g. genomic data of the person related to the user. The encrypted sensitive data of the user may be stored in a repository or database part that may be exclusive to the user.

The unique encryption key exclusively generated for the user may be stored encrypted in the data system. The unique encryption key may be encrypted using a user key (of reference, only known by the user) and, optionally, a system key (only known by the data system). The unique encryption key may be decrypted (using the user key and, optionally, the system key) each time the data system needs to decrypt all or part of the sensitive data of the user to provide the user with access thereto. Once used, the decrypted encryption key may be immediately deleted in order to minimize the risk that an attacker can stole the encryption key.

The registration of a (new) user may further comprise generating a hash value of reference by hashing a user key of reference created by the user and not stored anywhere in the data system, i.e. said user key is only known by the user. The hash value of reference may be stored in the data system and used for validation purposes when performing a method of providing the user with access to sensitive data assigned to the user.

The registration of a (new) user may still further comprise obtaining an encrypted version of the encryption key of the user by encrypting the unique encryption key using only the system key (known by the data system and unknown by the user). This encrypted version of the encryption key may be provided to the user as a backup of the encryption key that the user may provide to the data system when the user has forgotten the current user key. Details about this backup approach will be provided in other parts of the description.

The system key, which is known by the data system and unknown by the user, may be a single key for the entire data system and, hence, for all the users having sensitive data stored in the data system. The system key may only exist in a volatile memory (e.g. RAM) of the data system for increasing the security of the system. This may be achieved by inputting the system key manually each time the data system is initiated. Avoiding storing the system key in a non-volatile memory, the risk that an attacker can retrieve the system key for malicious usage is reduced.

In a data system as the proposed ones, sensitive data associated to different users may thus be stored encrypted, each of the users having his/her data stored in a repository (or database part) individually assigned to the user. For example, according to what is shown in Figure 1, each of the users may have an exclusively assigned database part in the Genomic Database 105 storing encrypted genomic data associated to the user. Similarly, each of the users may have an exclusively assigned database part in the Management Database 106 storing, for example, a user ID uniquely identifying the user, the encrypted unique encryption key exclusively attributed to the user, the hash value of reference, etc.

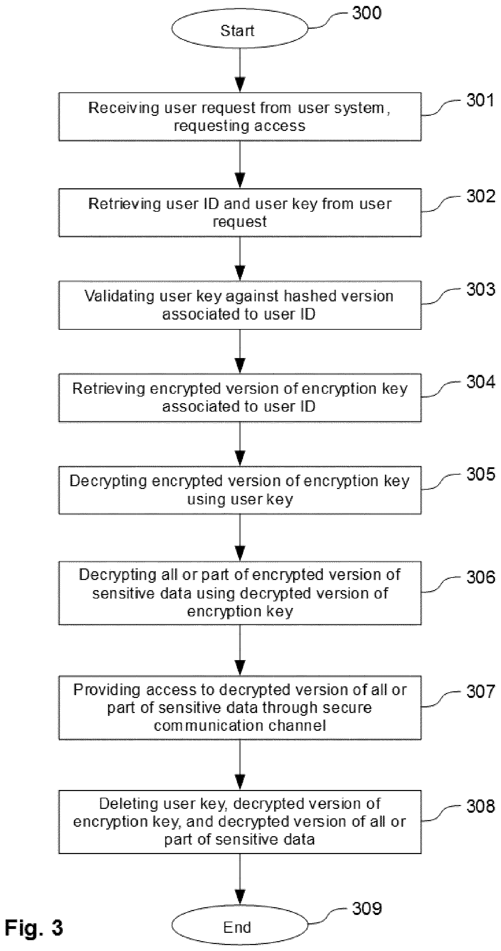

Figure 3 illustrates a flow diagram of a method of providing access to sensitive data according to further examples. A data system equal or similar to those described with reference to previous figures may be configured to perform this method, which may be started at initial block 300.

At block 301, a user request may be received by the data system from a user system. The received user request may comprise a user ID uniquely identifying the user and a user key that is not stored anywhere in the data system.

At block 302, the method may comprise retrieving the user ID and the user key from the received user request.

At block 303, the received user key may be hashed to produce a hashed version of the user key, and said hashed version may be validated against a pre-calculated hash value of reference, which may have been obtained in the context of a registration method such as the ones explained before. The pre-calculated hash value of reference may be stored in the data system for validating received user keys whenever required. A hashed version of the received user key may be obtained by hashing the received user key using a predefined hash function that was also used to generate the pre-calculated hash value of reference.

The hashed version of the received user key may be compared with the hash value of reference. If the hashed version of the received user key coincides with the stored hash value of reference, the method may continue to block 304. Otherwise, the user may be requested to provide a valid user key up to a predetermined number of times, after which the method may be aborted, i.e. redirected to final block 309, if the received user key has not been validated successfully.

At block 304, an encrypted version of the unique encryption key exclusively assigned to the user may be retrieved from e.g. a database part in the Management Database 106 assigned to the user. This retrieval may be performed using the received user ID as unique identifier of the user, i.e. as a primary key in a relational database, for example.

The encryption key (uniquely assigned to the user) may have been initially encrypted, in e.g. a registration process such as the ones described before, exclusively using a user key of reference (only known by the user). Said initial encryption may have been performed further using a system key only known by the data system. Using such a system key may provide the data system with an increased security in the case that e.g. the user key is unexpectedly "stolen" by an attacker.

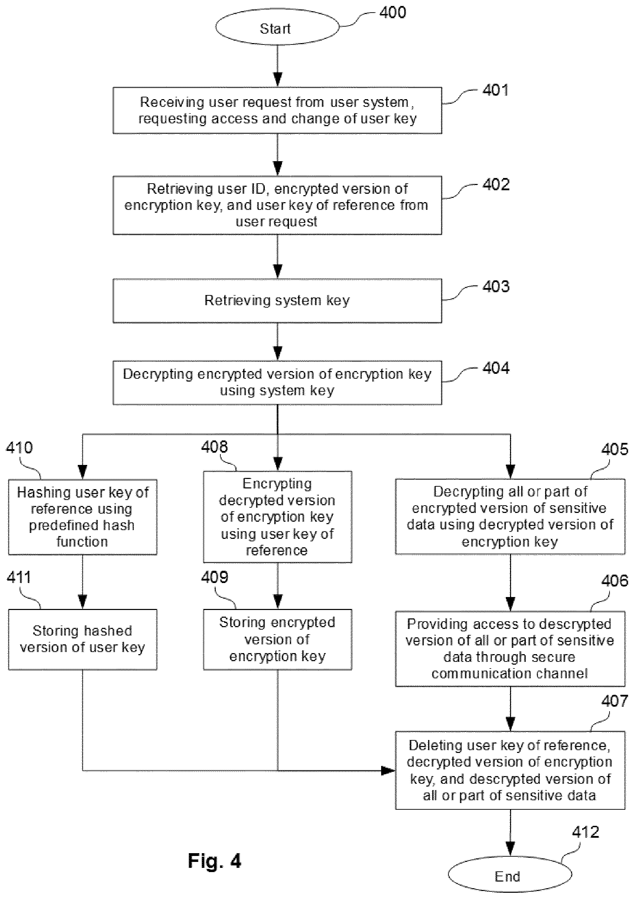

As explained in other parts of the description, the user may be allowed to change his/her user key as many times as desired/required. Each of said changes of the user key may require re-encrypting the encryption key assigned to the user using a user key of reference provided by the user. This aspect will be explained in detail with reference to Figure 4.

At block 305, a decrypted version of the encryption key (associated to the user) may be obtained by decrypting the encrypted version of the encryption key retrieved at previous block 304. Said decryption may be performed using the received user key (validated at block 303) and, optionally, the system key, depending on how the encryption key has been (re)encrypted in corresponding (re)initialization process.

At block 306, all or part of the encrypted sensitive data of the user stored in the data system may be decrypted using the decrypted version of the encryption key (obtained at block 305). The received user request may further include, for example, selection data indicating which part of the sensitive data the user wants to access, such as e.g. a specific genomic region. In this sense, the encrypted sensitive data may be stored partitioned in the data system in such a way that only some partitions need to be decrypted according to the selection data included in the received user request.

At block 307, the data system may provide suitable access to the (selected) decrypted sensitive data associated to the user through a secure communication channel. As described in detail with reference to e.g. Figure 2, said access may be provided to the user system and/or to a third party system through a secured communication between the data system and the user system and/or the third party system. This secure communication may be established according to principles equal or similar to those described in other parts of the description, such as e.g. providing persistent views following a host-proof model.

At block 308, once the provision of the access has been completed, the user key, the decrypted version of the encryption key, and the decrypted version of all or part of the sensitive data may be deleted. Alternatively, each of these deletions may be performed just after corresponding sensitive and key data is no more needed to complete the execution of the method. For example, the user key may be deleted just after the decryption of the encrypted version of the encryption key. These deletions may be explicit or implicit. An explicit deletion of data may be performed by executing an instruction specifically aimed at deleting the data. An implicit deletion may result from the completion of a software execution which may cause the deletion (from RAM memory) of all the data related with the execution.

At block 309, the execution of the method may be finalized without keeping any sensitive and key data decrypted in the data system. In particular, the user key is not kept in the data system neither encrypted nor decrypted, but it is deleted when unneeded. The user key is seen by the data system only when it is strictly required for providing access to the sensitive data in decrypted (or clear) form. Hence, access to sensitive data associated to the user is completely under control of the user, since the data system cannot provide such an access without receiving the user key from the user.

In the examples illustrated in Figure 3, the data system may not provide access to sensitive data of the user if the user key provided by the user does not coincide with the user key (of reference) that was used in the last (re)encryption of the encryption key. In this case, the method fails the validation of the received user key (performed at block 303) and the access to sensitive data is not permitted.

Figure 4 illustrates a flow diagram of a method of providing a user with access to sensitive data of the user, according to still further examples. Data systems similar to those disclosed in other parts of the description may be configured to perform the illustrated method, which may start at initial block 400.

At block 401, the method may comprise receiving, from a user system, a user request requesting access to sensitive data associated to the user, and change of the user key associated to the user.

This method may be suitable for situations in which methods according to Figure 3 produce an unsuccessful validation of the received user key (at block 303). This unsuccessful validation may occur if e.g. the user has forgotten the user key with which his/her encryption key is currently encrypted. In these circumstances, the user may be allowed to provide the data system with a user key of reference to be used for re-encrypting the encryption key of the user.

At block 402, a user ID uniquely identifying the user, an encrypted version of the encryption key of the user, and a user key may be retrieved from the received user request. The received user key may be, in this case, a "user key of reference" as defined in other parts of the description. The encrypted version of the encryption key may be a "backup" encrypted version of the encryption key in the terms defined in other parts of the description.

The user ID may be used as a unique identifier of the user to access database parts exclusively assigned to the user for retrieving data related to the user that are necessary for performing the method. The user ID may thus be a primary key in the context of a relational database.

At block 403, the system key may be retrieved, and at block 404, a decrypted version of the encryption key may be obtained by decrypting the received encrypted version of the encryption key using (only) the system key.

At block 405, a decrypted version of all or part of the sensitive data assigned to the user ID may be obtained by decrypting all or part of the encrypted version of the sensitive data using the decrypted version of the encryption key (obtained at block 404). Similar considerations to those made with respect to block 306 of Figure 3 may be taken into account for this block 405.

At block 406, access may be provided by the data system to the decrypted version of all or part of the sensitive data assigned to the user ID (obtained at block 405) through a secure communication channel. Similar considerations to those made with respect to block 307 of Figure 3 may be taken into account in this case of block 406.

At block 408, the decrypted version of the encryption key obtained at previous block 404 may be encrypted using at least the user key of reference. The system key may also be used as auxiliary key, in which case the encryption key is encrypted using both the user key of reference and the system key. From this moment, sensitive data of the user may be accessed by performing methods according to Figure 3, wherein sensitive data is decrypted using a user key that must coincide with the user key of reference.

At block 409, the encrypted version of the encryption key obtained at block 408 may be stored in e.g. a database part assigned to the user ID, which may be comprised in a Management Database 106 such as the one of Figure 1.

At block 410, a hash value of reference (or hashed version of the user key of reference) may be obtained by hashing the user key of reference using a predefined hash function and, at block 411, said hash value of reference may be stored in corresponding database part assigned to the user ID. This hash value of reference may be used to perform the validation of block 303 when performing methods according to Figure 3.

At block 407, once the blocks 406, 409 and 411 have been completed, the user key of reference, the (backup) decrypted version of the encryption key, and the decrypted version of all or part of the sensitive data may be deleted. Alternatively, each of these deletions may be performed just after corresponding data is no more needed to complete the execution of the method. These deletions may be explicit or implicit as defined in other parts of the description.

At block 412, the execution of the method is finalized without keeping any sensitive and key data decrypted in the data system, as similarly explained with respect to block 309 of Figure 3.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

Further, although the examples described with reference to the drawings comprise computing apparatus/systems and processes performed in computing apparatus/systems, the invention also extends to computer programs, particularly computer programs on or in a carrier, adapted for putting the system into practice.

## Claims

1. Method of providing, by a data system (100; 200), access to sensitive data associated to a user, the data system (100; 200) storing an encrypted version of the sensitive data obtained as a result of encrypting the sensitive data using an encryption key associated to the user, the method comprising:
receiving (401), from a user system, a user request requesting the provision of access;
retrieving (402) from the received user request a backup version of the encryption key generated and provided to the user in a registration process, instead of from a repository in the data system;
retrieving (403) a system key associated to the data system (100; 200);
retrieving (402) a user key created by the user from the received user request;
obtaining (404) a decrypted version of the encryption key by decrypting the backup version of the encryption key using the system key;
obtaining (405) a decrypted version of all or part of the sensitive data by decrypting all or part of the encrypted version of the sensitive data using the decrypted version of the encryption key;
encrypting (408) the decrypted version of the encryption key using the user key and the system key, and storing the encryption key once encrypted in the repository for later provisions of access depending on both the user key and the system key; and
providing access (406) to the decrypted version of all or part of the sensitive data through a secure communication channel.

2. Method according to claim 1, further comprising hashing (410) the user key using a predefined hash function for obtaining a hash value of reference for validation purposes.

3. Method according to any of claims 1 or 2, wherein the system key is a passphrase or password associated to the data system (100; 200).

4. Method according to any of claims 1 to 3, wherein the system key is retrieved from a volatile memory in the data system (100; 200).

5. Method according to claim 4, wherein the system key is inputted in the data system (100; 200) through data entry functionality when the data system (100; 200) is initiated.

6. Method according to any of claims 1 to 5, wherein providing access (406) to the decrypted version of all or part of the sensitive data through the secure communication channel comprises
providing (406) the user system with access to the decrypted version of all or part of the sensitive data through the secure communication channel.

7. Method according to any of claims 1 to 6, wherein the received user request comprises authorization data indicating that a third party system (209) has been authorized by the user to be provided with the access; and wherein
providing access (406) to the decrypted version of all or part of the sensitive data through the secure communication channel comprises
providing the third party system (209) with access to the decrypted version of all or part of the sensitive data through the secure communication channel, based on the authorization data.

8. Method according to any of claims 1 to 7, wherein the sensitive data associated to a user is genomic data of a person associated to the user.

9. Method according to claim 8, wherein the genomic data of the person associated to the user comprises a whole genome sequencing experiment or any other sequencing experiment of the person.

10. Data system (100; 200) for providing access to sensitive data associated to a user, the data system (100; 200) comprising:
means for storing an encrypted version of the sensitive data obtained as a result of encrypting the sensitive data using an encryption key associated to the user;
means for receiving (401), from a user system, a user request requesting the provision of access;
means for retrieving (402) from the received user request a backup version of the encryption key generated and provided to the user in a registration process, instead of from a repository in the data system;
means for retrieving (403) a system key associated to the data system (100; 200);
means for retrieving (402) a user key created by the user from the received user request;
means for obtaining (404) a decrypted version of the encryption key by decrypting the backup version of the encryption key using the system key;
means for obtaining (405) a decrypted version of all or part of the sensitive data by decrypting all or part of the encrypted version of the sensitive data using the decrypted version of the encryption key;
means for encrypting (408) the decrypted version of the encryption key using the user key and the system key, and storing the encryption key once encrypted in the repository for later provisions of access depending on both the user key and the system key; and
means for providing access (406) to the decrypted version of all or part of the sensitive data through a secure communication channel.

11. Computer program product comprising program instructions for causing a computing system to perform a method according to any of claims 1 to 9 of providing access to sensitive data associated to a user.

12. A computer program product according to claim 11, embodied on a storage medium.

13. A signal carrying the computer program according to claim 11.

## Patentansprüche

1. Verfahren zum Bereitstellen von Zugriff auf sensible Daten, die einem Benutzer zugeordnet sind, mittels eines Datensystems (100; 200), wobei das Datensystem (100; 200) eine verschlüsselte Version der sensiblen Daten speichert, die als Ergebnis einer Verschlüsselung der sensiblen Daten unter Verwendung eines dem Benutzer zugeordneten Verschlüsselungsschlüssels erhalten wurden, wobei das Verfahren folgendes umfasst:
Empfangen (401) einer Benutzeranforderung von einem Benutzersystem, die die Bereitstellung des Zugriffs anfordert;
Abrufen (402) von einer Backup-Version des Verschlüsselungsschlüssels, das erzeugt worden ist und an den Benutzer in einem Registrierverfahren bereitgestellt worden ist aus der empfangenen Benutzeranforderung statt aus einem Depot im Datensystem;
Abrufen (403) von einem mit dem Datensystem (100; 200) verknüpften Systemschlüssel;
Abrufen (402) von einem durch den Benutzer ausgehend von der empfangenen Benutzeranforderung erzeugten Benutzerschlüssel;
Erhalten (404) von einer entschlüsselten Version des Verschlüsselungsschlüssels durch Entschlüsselung der Backup-Version des Verschlüsselungsschlüssels unter Verwendung des Systemschlüssels;
Erhalten (405) von einer entschlüsselten Version aller oder eines Teils der sensiblen Daten durch Entschlüsselung der gesamten oder eines Teils der verschlüsselten Version der sensiblen Daten unter Verwendung der entschlüsselten Version des Verschlüsselungsschlüssels;
Verschlüssen (408) der entschlüsselten Version des Verschlüsselungsschlüssels unter Verwendung des Benutzerschlüssels und des Systemschlüssels und Speichern des einmal in dem Depot verschlüsselten Verschlüsselungsschlüssels für spätere Zugriffsbereitstellungen in Abhängigkeit von sowohl dem Benutzerschlüssel als auch vom Systemschlüssel; und
Zugriffsbereitstellung (406) auf die entschlüsselte Version aller oder eines Teils der sensiblen Daten über einen sicheren Kommunikationskanal.

2. Verfahren nach Anspruch 1, weiterhin umfassend das Hashing (410) des Benutzerschlüssels unter Verwendung von einer vordefinierten Hash-Funktion zum Erhalten eines Hash-Referenzwerts für Validierungszwecke.

3. Verfahren nach einem der Ansprüche 1 oder 2, wobei der Systemschlüssel eine Passphrase oder ein Passwort ist, die bzw. das dem Datensystem (100; 200) zugeordnet sind.

4. Verfahren nach einem der Ansprüche 1 bis 3, wobei der Systemschlüssel aus einem flüchtigen Speicher in dem Datensystem (100; 200) abgerufen wird.

5. Verfahren nach Anspruch 4, wobei der Systemschlüssel durch Dateneingabefunktionalität in das Datensystem (100; 200) eingegeben wird, wenn das Datensystem (100; 200) initiiert wird.

6. Verfahren nach einem der Ansprüche 1 bis 5, wobei das Zugriffbereitstellen (406) auf die entschlüsselte Version aller oder eines Teils der sensiblen Daten über den sicheren Kommunikationskanal folgendes umfasst
Bereitstellen (406) von Zugriff auf die entschlüsselte Version aller oder eines Teils der sensiblen Daten über den sicheren Kommunikationskanal für das Benutzersystem.

7. Verfahren nach einem der Ansprüche 1 bis 6, wobei die empfangene Benutzeranforderung Autorisierungsdaten umfasst, die angeben, dass ein Drittanbieter-System (209) vom mit Zugriff zu versorgenden Benutzer autorisiert wurde; und wobei
das Zugriffsbereitstellen (406) auf die entschlüsselte Version aller oder eines Teils der sensiblen Daten über den sicheren Kommunikationskanal folgendes umfasst
Bereitstellen von Zugriff für das Drittanbieter-System (209) auf die entschlüsselte Version aller oder eines Teils der sensiblen Daten über den sicheren Kommunikationskanal auf der Grundlage der Autorisierungsdaten.

8. Verfahren nach einem der Ansprüche 1 bis 7, wobei die einem Benutzer zugeordneten sensiblen Daten Genomdaten einer dem Benutzer zugeordneten Person sind.

9. Verfahren nach Anspruch 8, wobei die Genomdaten der dem Benutzer zugeordneten Person ein ganzes Genomsequenzierungsexperiment oder ein beliebiges anderes Sequenzierungsexperiment der Person umfassen.

10. Datensystem (100; 200) zum Bereitstellen von Zugriff auf sensible Daten, die einem Benutzer zugeordnet sind, wobei das Datensystem (100; 200) folgendes umfasst:
ein Mittel zum Speichern einer verschlüsselten Version der sensiblen Daten, die als Ergebnis der Verschlüsselung der sensiblen Daten unter Verwendung von einem dem Benutzer zugeordneten Verschlüsselungsschlüssels erhalten worden sind;
ein Mittel zum Empfangen (401) einer Benutzeranforderung von einem Benutzersystem, die die Bereitstellung des Zugriffs anfordert;
ein Mittel zum Abrufen (402) von einer Backup-Version des Verschlüsselungsschlüssels, das erzeugt wurde und an den Benutzer in einem Registrierverfahren bereitgestellt worden ist aus der empfangenen Benutzeranforderung statt aus einem Depot im Datensystem;
ein Mittel zum Abrufen (403) von einem mit dem Datensystem (100; 200) verknüpften Systemschlüssel;
ein Mittel zum Abrufen (402) von einem durch den Benutzer ausgehend von der empfangenen Benutzeranforderung erzeugten Benutzerschlüssel;
ein Mittel zum Erhalten (404) von einer entschlüsselten Version des Verschlüsselungsschlüssels durch Entschlüsseln der Backup-Version des Verschlüsselungsschlüssels unter Verwendung des Systemschlüssels;
ein Mittel zum Erhalten (405) von einer entschlüsselten Version aller oder eines Teils der sensiblen Daten durch Entschlüsseln der gesamten oder eines Teils der verschlüsselten Version der sensiblen Daten unter Verwendung der entschlüsselten Version des Verschlüsselungsschlüssels;
ein Mittel zum Verschlüssen (408) der entschlüsselten Version des Verschlüsselungsschlüssels unter Verwendung des Benutzerschlüssels und des Systemschlüssels und Speichern des einmal verschlüsselten Verschlüsselungsschlüssels in dem Depot für spätere Zugriffsbereitstellungen in Abhängigkeit von sowohl dem Benutzerschlüssel als auch vom Systemschlüssel; und
ein Mittel zum Bereitstellen von Zugriff (406) auf die entschlüsselte Version aller oder eines Teils der sensiblen Daten über einen sicheren Kommunikationskanal.

11. Computerprogrammprodukt umfassend Programmanweisungen, um ein Computersystem dazu zu bringen, ein Verfahren nach einem der Ansprüche 1 bis 9 zum Bereitstellen von Zugriff auf sensible Daten, die einem Benutzer zugeordnet sind, durchzuführen.

12. Ein Computerprogrammprodukt nach Anspruch 11, das in einem Speichermedium enthalten ist.

13. Ein Signal, das das Computerprogrammprodukt nach Anspruch 11 trägt.

## Revendications

1. Procédé pour fournir, moyennant un système de données (100 ; 200), un accès à des données sensibles associées à un utilisateur, le système de données (100 ; 200) stockant une version chiffrée des données sensibles obtenues à la suite du chiffrage des données sensibles à l'aide d'une clé de chiffrage associée à l'utilisateur, le procédé comprenant :
recevoir (401), d'un système utilisateur, une demande d'utilisateur demandant la fourniture d'accès ;
extraire (402) de la demande d'utilisateur reçue une version de réserve de la clé de chiffrage générée et fournie à l'utilisateur dans un processus d'enregistrement, au lieu d'un dépôt du système de données ;
extraire (403) une clé de système associée au système de données (100 ; 200)
; extraire (402) une clé d'utilisateur créée par l'utilisateur de la demande d'utilisateur reçue ;
obtenir (404) une version déchiffrée de la clé de chiffrement en déchiffrant la version de réserve de la clé de chiffrement en utilisant la clé de système ;
obtenir (405) une version déchiffrée de toutes ou d'une partie des données sensibles en déchiffrant toute ou une partie de la version chiffrée des données sensibles à l'aide de la version déchiffrée de la clé de chiffrement ; et
chiffrer (408) la version déchiffrée de la clé de chiffrement à l'aide de la clé d'utilisateur et de la clé de système, et stocker la clé de chiffrement une fois chiffrée dans le dépôt pour des fournitures postérieures d'accès en fonction tant de la clé d'utilisateur que de la clé de système ; et
fournir un accès (406) à la version déchiffrée de toutes ou de partie des données sensibles via un canal de communication sécurisé.

2. Procédé selon la revendication 1, comprenant en outre le hachage (410) de la clé d'utilisateur en utilisant une fonction de hachage prédéfinie pour obtenir une valeur de hachage de référence à des fins de validation.

3. Procédé selon l'une quelconque des revendications 1 ou 2, dans lequel la clé système est une phrase de passe ou un mot de passe associé(e) au système de données (100 ; 200).

4. Procédé selon l'une quelconque des revendications 1 à 3, dans lequel la clé de système est extraite d'une mémoire volatile du système de données (100 ; 200).

5. Procédé selon la revendication 4, dans lequel la clé de système est entrée dans le système de données (100 ; 200) via une fonctionnalité d'entrée de données lorsque le système de données (100 ; 200) est lancé.

6. Procédé selon l'une quelconque des revendications 1 à 5, dans lequel fournir un accès (406) à la version déchiffrée de toutes ou d'une partie des données sensibles via le canal de communication sécurisé comprend
fournir (406) au système d'utilisateur un accès à la version déchiffrée de toutes ou d'une partie des données sensibles via le canal de communication sécurisé.

7. Procédé selon l'une quelconque des revendications 1 à 6, dans lequel la demande d'utilisateur reçue comprend des données d'autorisation indiquant qu'un système tiers (209) a été autorisé par l'utilisateur à recevoir un accès ; et dans lequel
fournir un accès (406) à la version déchiffrée de toutes ou de partie des données sensibles via le canal de communication sécurisé comprend
fournir au système tiers (209) un accès à la version déchiffrée de toutes ou de partie des données sensibles via le canal de communication sécurisé, sur la base des données d'autorisation.

8. Procédé selon l'une quelconque des revendications 1 à 7, dans lequel les données sensibles associées à un utilisateur sont des données génomiques d'une personne associée à l'utilisateur.

9. Procédé selon la revendication 8, dans lequel les données génomiques de la personne associée à l'utilisateur comprennent une expérience de séquençage du génome entier ou toute autre expérience de séquençage de la personne.

10. Système de données (100 ; 200) pour fournir l'accès à des données sensibles associées à un utilisateur, le système de données (100 ; 200) comprenant :
un moyen pour stocker une version chiffrée des données sensibles obtenues à la suite du chiffrage des données sensibles à l'aide d'une clé de chiffrage associée à l'utilisateur ;
un moyen pour recevoir (401), à partir d'un système d'utilisateur, une demande d'utilisateur demandant la fourniture d'accès ;
un moyen pour extraire (402) de la demande d'utilisateur reçue une version de réserve de la clé de chiffrage générée et fournie à l'utilisateur dans un processus d'enregistrement, au lieu d'un dépôt du système de données ;
un moyen pour extraire (403) une clé de système associée au système de données (100 ; 200) ;
un moyen pour extraire (402) une clé d'utilisateur créée par l'utilisateur de la demande d'utilisateur reçue ;
un moyen pour obtenir (404) une version déchiffrée de la clé de chiffrement en déchiffrant la version de réserve de la clé de chiffrement en utilisant la clé de système ;
un moyen pour obtenir (405) une version déchiffrée de toutes ou d'une partie des données sensibles en déchiffrant toute ou une partie de la version chiffrée des données sensibles à l'aide de la version déchiffrée de la clé de chiffrement ;
un moyen pour chiffrer (408) la version déchiffrée de la clé de chiffrement à l'aide de la clé d'utilisateur et de la clé de système, et stocker la clé de chiffrement une fois chiffrée dans le dépôt pour des fournitures postérieures d'accès en fonction tant de la clé d'utilisateur que de la clé de système ; et
un moyen pour fournir un accès (406) à la version déchiffrée de toutes ou de partie des données sensibles via un canal de communication sécurisé.

11. Produit de programme informatique comprenant des instructions de programme pour amener un système informatique à exécuter un procédé selon l'une quelconque des revendications 1 à 9 pour fournir un accès à des données sensibles associées à un utilisateur.

12. Un produit de programme informatique selon la revendication 11, incorporé dans un support de stockage.

13. Un signal portant le programme informatique selon la revendication 11.
